# EUROPEAN PATENT SPECIFICATION

(11) **EP 2 493 068 B1**
(45) Date of publication and mention of the grant of the patent: **21.10.2020**
(21) Application number: 12156325.8
(22) Date of filing: 21.02.2012
(51) Int. Cl.: H02P 27/08, H02P 21/00, H02P 23/00

(54) **Inverter control device and inverter control method**
Umrichtersteuerungsvorrichtung und Umrichtersteuerungsverfahren
Dispositif de contrôle d'inverseur et procédé de contrôle d'inverseur

(30) Priority: 28.02.2011 JP 2011043295
(43) Date of publication of application: 29.08.2012
(73) Proprietor: MITSUBISHI HEAVY INDUSTRIES THERMAL SYSTEMS, LTD., Tokyo 108-8215 (JP)
(72) Inventor: Takeuchi, Hiroyuki, Minato-Ku, Tokyo, 108-8215 (JP); Morikawa, Junji, Minato-Ku, Tokyo, 108-8215 (JP); Kondo, Seiji, Minato-Ku, Tokyo, 108-8215 (JP); Kanie, Tetsuo, Minato-Ku, Tokyo, 108-8215 (JP); Sumito, Kiyotaka, Minato-Ku, Tokyo, 108-8215 (JP); Shimizu, Kenji, Minato-Ku, Tokyo, 108-8215 (JP)
(74) Representative: Cabinet Beau de Loménie

(56) References cited:
- EP-A2- 1 898 519
- EP-A2- 2 020 743
- JP-A- 2003 116 295
- JP-A- 2007 069 833
- US-A1- 2010 320 948

## Description

### {Technical Field}

The present invention relates to an inverter control device and an inverter control method.

### {Background Art}

In multi-type air conditioners, higher-speed motors and multipolar rotors have been required in recent years because of a demand for increased efficiency, and hence, inverters for supplying power to motors are required to have increased frequency of motor current, etc.

### {Citation List}

### {Patent Literature}

{PTL 1} Japanese Unexamined Patent Application, Publication No. 2008-11620

### {Summary of Invention}

### {Technical Problem}

The motor current is controlled by an inverter control device. If the frequency of the motor current is higher than the capacity of the inverter control device, the inverter control device cannot perform appropriate control, resulting in various problems, such as a decrease in the number of calculations for setting the duty cycle of a PWM waveform in a single cycle of a current waveform, and a difference in the number of times control is performed between the positive side and the negative side of current. In such cases, the current waveform may be distorted beyond the allowable range, or oscillations may occur in the motor current.

The present invention has been made in view of these circumstances, and an object thereof is to provide an inverter control device and an inverter control method that enable appropriate inverter control even in the case of severe requirements with regard to moves towards higher speed motors and making motors multipolar.

JP 2007-069833 A discloses an electric power steering system in which the motor current is controlled by an inverter control device. EP 1 8989 519 A2 discloses a motor control device.

### {Solution to Problem}

To overcome the above-described problems, the present invention employs the solution as defined by the independent claims 1 and 2.

The present invention provides an inverter control device configured to generate a PWM pulse signal using a carrier signal having a carrier frequency that is k (k is larger than or equal to 1 and is a multiple of 0.5) times a reference carrier frequency and to regenerate a PWM duty cycle at an interval of half a cycle of the carrier signal. The inverter control device includes control means (13) for executing first processing at an interval of one cycle at the reference carrier frequency and executing second processing at an interval of half a cycle of the carrier signal. The first processing includes the steps of calculating a two-phase current by converting a measured motor current from three-phase to two-phase, and calculating a two-phase voltage command value and a first electrical angle from the two-phase current. The second processing includes the steps of calculating a second electrical angle by adding a shift angle obtained based on the time elapsed from the first processing to the first electrical angle calculated in the first processing, calculating a three-phase voltage command value by converting the two-phase voltage command value obtained in the first processing from two-phase to three-phase using the calculated second electrical angle, and calculating a duty cycle of the PWM pulse signal from the three-phase voltage command value.

With the above-described inverter control device, because the first processing is executed at an interval of one cycle at the carrier frequency and the second processing is executed at an interval of half a cycle at the carrier frequency to regenerate a PWM duty cycle, the inverter can be controlled more finely than in the related art even when a reference carrier signal is used. Furthermore, by making the frequency of the carrier signal higher than the reference carrier frequency, the rate of regenerating a PWM duty cycle can be further increased, thereby enabling appropriate inverter control even in the case of severe requirements with regard to moves towards higher speed motors and making motors multipolar.

In the above-described inverter control device, the second processing is prioritized over the first processing, and if a timing of execution of the second processing occurs during execution of the first processing, the first processing is temporarily stopped to execute the second processing.

By prioritizing the second processing over the first processing as described above, even if the second processing execution timing occurs during execution of the first processing because a high carrier frequency is set, the second processing can be executed by interrupting the first processing. Therefore, it becomes possible to set the carrier frequency based on the time needed to execute the second processing, and thus, the inverter control speed can be further increased.

Another aspect of the present disclosure, which is not claimed, is directed to an inverter control device configured to generate a PWM pulse signal using a high-frequency carrier signal having a carrier frequency that is m (m is an integer larger than or equal to 2) times a reference carrier frequency and to regenerate a PWM duty cycle at an interval of one cycle of the high-frequency carrier signal. The inverter control device includes control means (13) for executing first processing at an interval of one cycle at the reference carrier frequency and executing second processing at an interval of one cycle of the high-frequency carrier signal. The first processing includes the steps of calculating a two-phase current by converting a measured motor current from three-phase to two-phase, and calculating a two-phase voltage command value and a first electrical angle from the two-phase current. The second processing includes the steps of calculating a second electrical angle by adding a shift angle obtained based on the time elapsed from the first processing to the first electrical angle calculated in the first processing, calculating a three-phase voltage command value by converting the two-phase voltage command value obtained in the first processing from two-phase to three-phase using the calculated second electrical angle, and calculating a duty cycle of the PWM pulse signal from the three-phase voltage command value.

With the above-described inverter control device, because a high-frequency carrier signal having a frequency that is m (m is an integer larger than or equal to 2) times the frequency of the reference carrier signal is generated, and a PWM duty cycle is regenerated at an interval of one cycle of the high-frequency carrier signal, the inverter can be finely controlled. Furthermore, because the processing to obtain the PWM duty cycle is divided into the first processing and the second processing, and calculation results (the two-phase voltage command value and the electrical angle) obtained in the first processing are advantageously utilized to obtain a PWM duty cycle in the second processing, the processing time for calculating the PWM duty cycle can be reduced. Accordingly, even if the length of a single cycle of the high-frequency carrier signal is reduced by multiplying the frequency of the reference carrier signal by m, a PWM duty cycle can be calculated within the duration of a single cycle.

The term "high-frequency" of the high-frequency carrier signal means that it has a higher frequency than the reference carrier signal.

In the above-described inverter control device, the second processing is prioritized over the first processing, and if a timing of execution of the second processing occurs during execution of the first processing, the first processing is temporarily stopped to execute the second processing.

By prioritizing the second processing over the first processing as described above, even if the second processing execution timing occurs during execution of the first processing because a high carrier frequency is set, the second processing can be executed by interrupting the first processing. Therefore, it becomes possible to set the carrier frequency based on the time needed to execute the second processing, and thus, the inverter control speed can be further increased.

The present invention also provides an inverter control method for generating a PWM pulse signal using a carrier signal having a carrier frequency that is k (k is larger than or equal to 1 and is a multiple of 0.5) times a reference carrier frequency and regenerating a PWM duty cycle at an interval of half a cycle of the carrier signal. The method includes a first processing step of executing first processing at an interval of one cycle at the reference carrier frequency, and a second processing step of executing second processing at an interval of half a cycle of the carrier signal. In the first processing step, a two-phase current is calculated by converting a measured motor current from three-phase to two-phase, and a two-phase voltage command value and a first electrical angle are calculated from the two-phase current. In the second processing step, a second electrical angle is calculated by adding a shift angle obtained based on the time elapsed from the first processing to the first electrical angle calculated in the first processing step, a three-phase voltage command value is calculated by converting the two-phase voltage command value obtained in the first processing from two-phase to three-phase using the calculated second electrical angle, and a duty cycle of the PWM pulse signal is calculated from the three-phase voltage command value.

With the above-described inverter control method, because the first processing is executed at an interval of one cycle at the carrier frequency and the second processing is executed at an interval of half a cycle at the carrier frequency to regenerate a PWM duty cycle, the inverter can be controlled more finely than in the related art even when a reference carrier signal is used. Furthermore, by making the frequency of the carrier signal higher than the reference carrier frequency, the rate of regenerating a PWM duty cycle can be further increased, thereby enabling appropriate inverter control even in the case of severe requirements with regard to moves towards higher speed motors and making motors multipolar.

In the above-described inverter control method, the second processing is prioritized over the first processing, and if a timing of execution of the second processing occurs during execution of the first processing, the first processing is temporarily stopped to execute the second processing.

By prioritizing the second processing over the first processing as described above, even if the second processing execution timing occurs during execution of the first processing because a high carrier frequency is set, the second processing is executed by interrupting the first processing. Therefore, it becomes possible to set the carrier frequency based on the time needed to execute the second processing, and thus, the inverter control speed can be further increased.

### {Advantageous Effects of Invention}

The present invention provides an advantage in that the inverter control speed is increased and that appropriate inverter control is enabled even in the case of severe requirements with regard to moves towards higher speed motors and making motors multipolar.

### {Brief Description of Drawings}

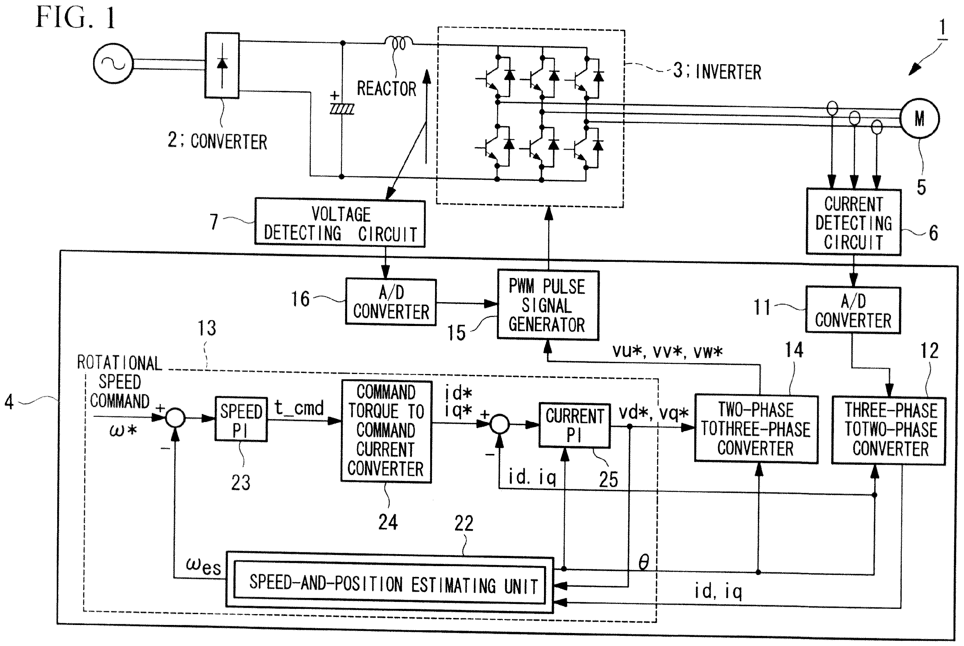

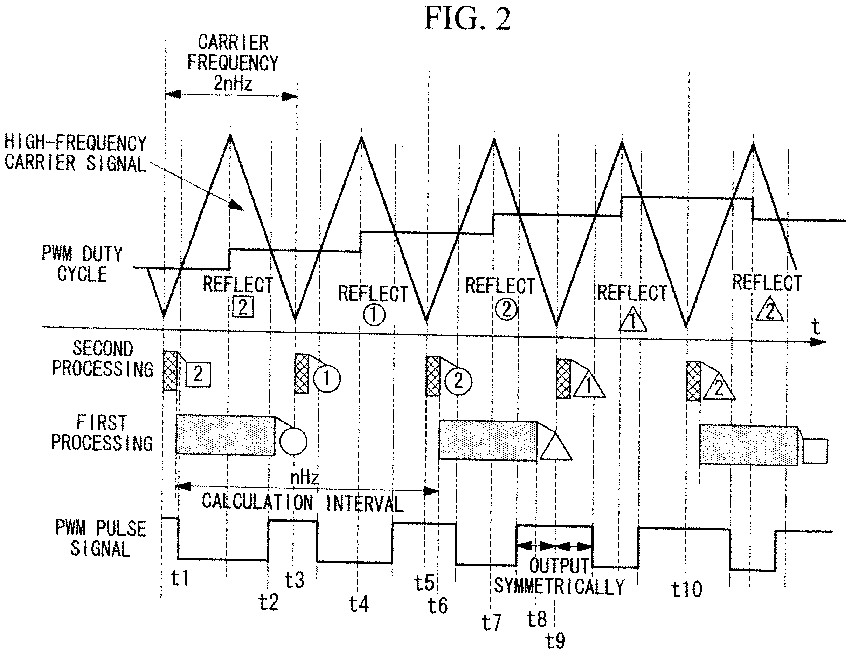

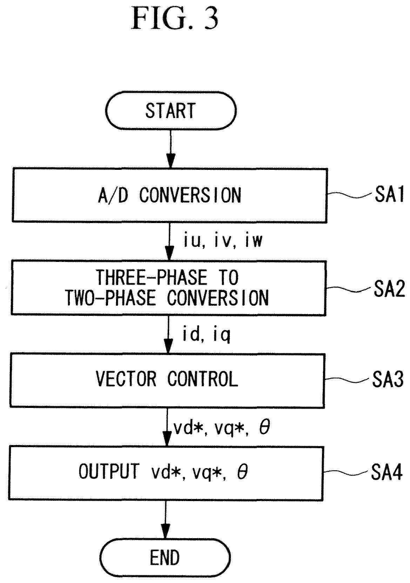

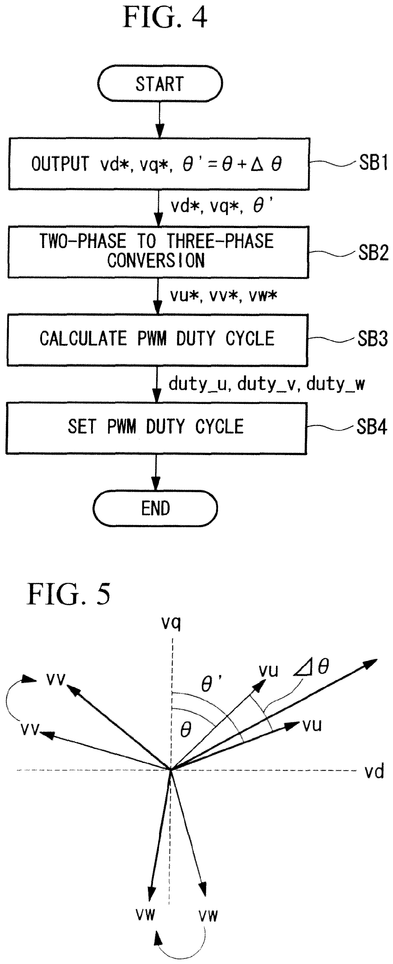

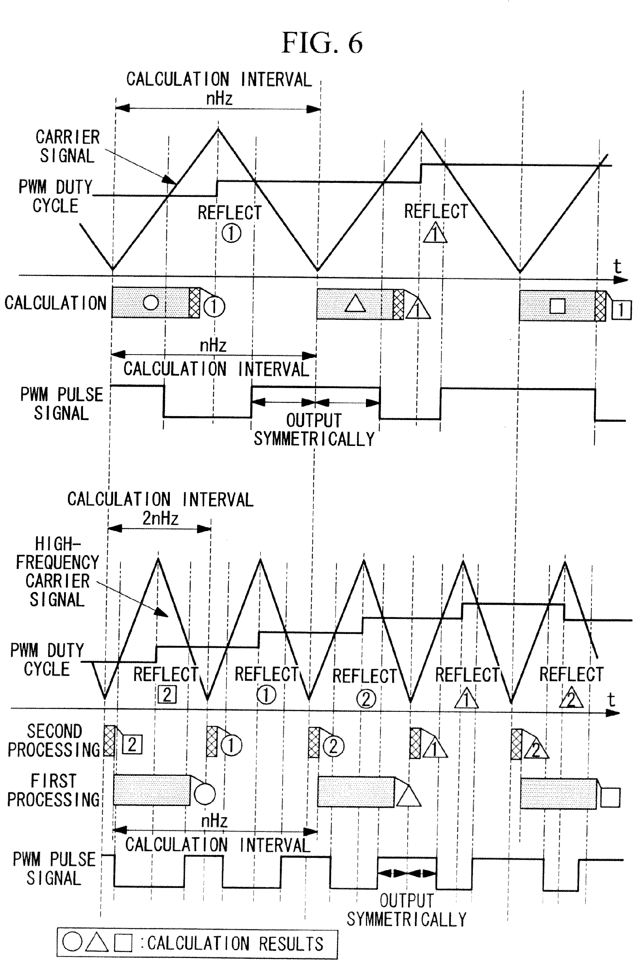

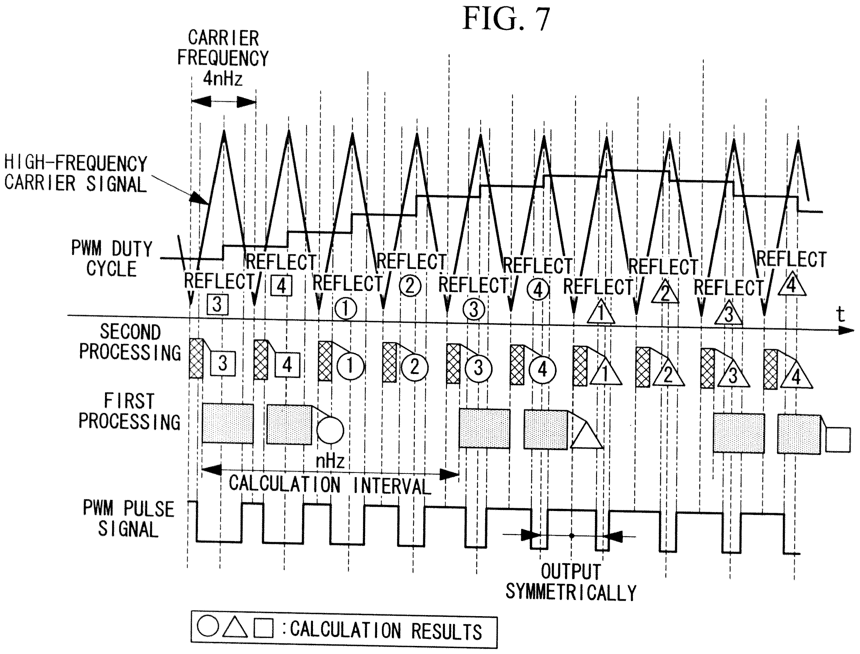

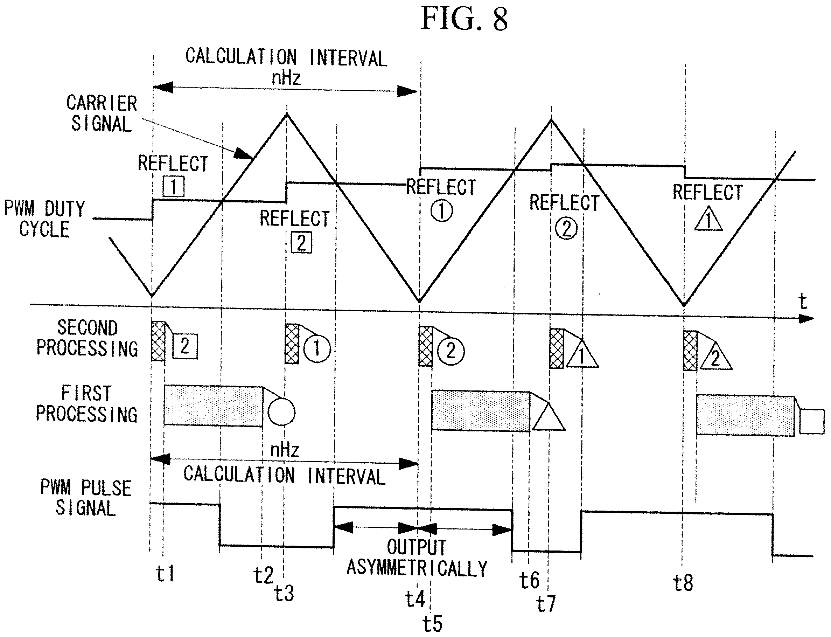

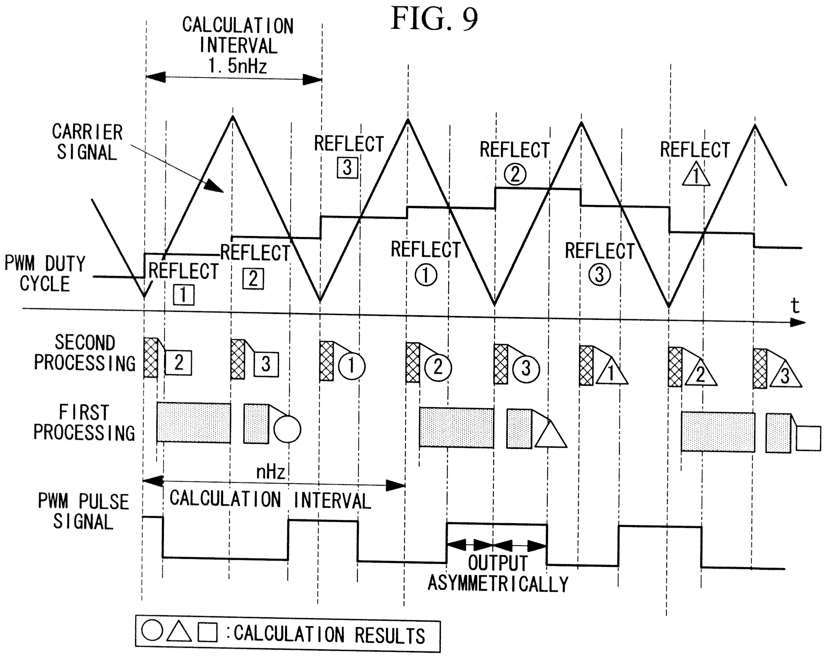

{FIG. 1} FIG. 1 is a schematic diagram showing the configuration of a motor driving device to which an inverter control device according to an example is applied.
{FIG. 2} FIG. 2 is a diagram showing the execution timing of each processing in the inverter control device.
{FIG. 3} FIG. 3 is a flowchart showing the procedure of first processing.
{FIG. 4} FIG. 4 is a flowchart showing the procedure of second processing.
{FIG. 5} FIG. 5 is a diagram showing electrical angles calculated in the second processing.
{FIG. 6} FIG. 6 is a diagram showing a comparison between the processing timing with an inverter control device of the related art and the processing timing with the inverter control device according to this example.
{FIG. 7} FIG. 7 is a diagram showing the execution timing of each processing when the frequency of a high-frequency carrier signal is 4 times the frequency of a reference carrier signal (m = 4), according to the example.
{FIG. 8} FIG. 8 is a diagram showing the execution timing of each processing in an inverter control device according to an embodiment of the present invention.
{FIG. 9} FIG. 9 is a diagram showing the execution timing of each processing when the frequency of a high-frequency carrier signal is 1.5 times the frequency of a reference carrier signal (k = 1.5), according to the embodiment of the present invention.

### {Description of Embodiments}

### Example

An inverter control device according to an example, which is not claimed but is included to allow understanding of the invention, will be described with reference to the drawings. FIG. 1 is a schematic diagram showing the configuration of a motor driving device to which an inverter control device according to this example is applied. As shown in FIG. 1, the motor driving device 1 includes a converter 2, an inverter 3, and an inverter control device 4 that controls the inverter 3. Reference numeral 5 in FIG. 1 denotes a motor driven by the motor driving device 1.

The converter 2 converts an AC voltage supplied from an AC power source to a DC voltage and supplies the DC voltage to the inverter 3. The inverter 3, which includes a three-phase bridge circuit composed of, for example, six switching devices, generates a three-phase (U, V, and W phases) driving voltage from the DC input voltage and supplies the generated three-phase driving voltage to the motor 5. The speed and torque of the motor 5 are controlled by means of the inverter control device 4 performing ON/OFF control of the switching devices of the inverter 3.

The three-phase current flowing from the inverter 3 to the motor 5 is detected by a current detecting circuit 6 and is output to the inverter control device 4. FIG. 1 shows an example in which a current sensor is provided on each of the three-phase power lines extending from the inverter 3 to detect respective U-phase, V-phase, and W-phase currents. However, it is also possible that, for example, two of the U-phase, V-phase, and W-phase currents are detected, and the remaining phase current is calculated from the two detected phase currents. By doing so, one sensor can be eliminated. Furthermore, instead of the sensors shown in FIG. 1, for example, a shunt resistor may be provided at a negative power line on the input side of the inverter 3 or at a lower arm portion of the bridge circuit in the inverter 3 to detect the current of each phase from the voltage and resistance at both ends thereof. Thus, the means for detecting current is not specifically limited in the present disclosure.

The DC input voltage to the inverter 3 is detected by the voltage detecting circuit 7 and is output to the inverter control device 4.

The inverter control device 4 is, for example, a micro processing unit (MPU). By reading computer programs for control that are stored in an internal memory and executing the programs, the inverter control device 4 generates a control signal for the inverter 3, which corresponds to a torque command and a motor-rotational-speed command determined based on the load on the motor, more specifically, a PWM pulse signal to be applied to the gates of the switching devices constituting the inverter 3, and applies the signal to the inverter 3.

FIG. 1 shows, in an expanded manner, the functions of the inverter control device 4. As shown in FIG. 1, the inverter control device 4 includes an A/D converter 11 that performs A/D conversion on a three-phase current detected by the current detecting circuit 6, a three-phase to two-phase converter 12 that converts the three-phase current output from the A/D converter 11 into a two-phase current, a vector control unit 13 that calculates a two-phase voltage command value and an electrical angle from the two-phase current converted by the three-phase to two-phase converter 12, a two-phase to three-phase converter 14 that converts the two-phase voltage command value calculated by the vector control unit 13 from two-phase to three-phase using the electrical angle calculated by the vector control unit 13 to obtain a three-phase voltage command value, a PWM pulse signal generator 15 that calculates the duty cycle of a PWM pulse signal from the three-phase voltage command value output from the two-phase to three-phase converter to generate the PWM pulse signal, and an A/D converter 16 that performs A/D conversion on the DC input voltage to the inverter 3 detected by the voltage detecting circuit 7 and outputs the voltage to the PWM pulse signal generator 15.

Herein, the vector control unit 13 employs sensorless vector control. For example, the vector control unit 13 includes a speed-and-position estimating unit 22, a torque-command calculating unit 23, a command converter 24, and a voltage command calculation unit 25.

FIG. 2 is a diagram showing the execution timing of each processing in the inverter control device 4. As shown in FIG. 2, in this example, a high-frequency carrier signal having a frequency (for example, nHz) that is m (m is an integer larger than or equal to 2) times a reference carrier signal (for example, a carrier signal used in the related art) is used to generate a PWM pulse signal. FIG. 2 shows a case where m = 2.

Furthermore, as shown in FIG. 2, the first processing is executed at an interval of one cycle at the frequency of the reference carrier signal nHz, and the second processing is executed at an interval of one cycle at the frequency of the high-frequency carrier signal 2nHz.

FIG. 3 is a flowchart showing the procedure of the first processing, and FIG. 4 is a flowchart showing the procedure of the second processing. In the functional block diagram of the inverter control device 4 shown in FIG. 1, the first processing corresponds to the processing executed by the two-phase to three-phase converter 12 and the vector control unit 13, and the second processing corresponds to the processing executed by the three-phase to two-phase converter 14 and the duty setting unit 15. Each processing will be described below.

In the first processing, a three-phase AC current detected by the current detecting unit 6 is subjected to A/D conversion by the A/D converter 11 (step SA1 in FIG. 3), and the three-phase AC current after A/D conversion is input to the three-phase to two-phase converter 12 to obtain a q-axis current i_{q} and a d-axis current i_{d} (step SA2 in FIG. 3). Next, the vector control unit 13 obtains a two-phase voltage command value (a q-axis voltage command v_{q}* and a d-axis voltage command v_{d}*) and an electrical angle θ based on the q-axis current i_{q} and the d-axis current i_{d} (step SA3 in FIG. 3). For example, the two-phase voltage command value and the electrical angle θ are obtained by the following processing.

First, the speed-and-position estimating unit 22 shown in FIG. 1 calculates a present rotor estimated position θₑₛ and a present rotor estimated speed ωₑₛ from the q-axis current i_{q} and d-axis current i_{d} calculated in the three-phase to two-phase converter 12 and from the q-axis voltage command v_{q}* and d-axis voltage command v_{d}* obtained in the immediately preceding processing. At this time, the estimated position θₑₛ and the estimated speed ωₑₛ are calculated using a motor model of the motor 5, for example. Next, the torque-command calculating unit 23 generates a torque command t_cmd such that the deviation between a rotational speed command ω* and the rotor estimated speed (rotational speed) ωₑₛ is zero, and the command converter 24 generates a q-axis current command i_{q}* and a d-axis current command i_{d}* from the torque command t_cmd.

Next, the voltage command calculation unit 25 obtains the q-axis voltage command v_{q}* and the d-axis voltage command v_{d}* such that the deviation between the q-axis current command i_{q}* and the q-axis current i_{q} and the deviation between the d-axis current command i_{d}* and the d-axis current i_{d} are close to zero.

Once the two-phase voltage command value, composed of the q-axis voltage command v_{q}* and the d-axis voltage command v_{d}*, and the electrical angle θ are obtained, this information is output to the two-phase to three-phase converter 14 (step SA4 in FIG. 3), and then, the first processing ends.

In the second processing, first, the three-phase to two-phase converter 14 adjusts the electrical angle. Specifically, whereas the first processing is executed at an interval of one cycle of the reference carrier signal, the second processing is executed at an interval of one cycle of the high-frequency carrier signal. In addition, the second processing is executed after a certain time has elapsed since the first processing is executed. Therefore, the electrical angle θ obtained in the first processing cannot be used without adjustment. Hence, an electrical angle θ' for the second processing is calculated by estimating a shift angle Δθ from the time elapsed since the electrical angle θ is calculated in the preceding first processing, and by adding a shift angle Δθ to the electrical angle θ obtained in the first processing, as shown in FIG. 5 (step SB1 in FIG. 4).

Next, using the electrical angle θ' in the second processing, two-phase to three-phase conversion is performed on the q-axis voltage command v_{q}* and d-axis voltage command v_{d}* obtained in the first processing to calculate three-phase voltage command values vᵤ*, vᵥ*, and v_{w}* (step SB2 in FIG. 4). The calculated three-phase voltage command values vₐ*, vᵥ*, and v_{w}* are output to the PWM pulse signal generator 15. The PWM pulse signal generator 15 calculates the duty cycles duty_u, duty_v, and duty_w of a PWM pulse signal from the provided three-phase voltage command values vᵤ*, vᵥ*, and v_{w}* (step SB3 in FIG. 4) and sets these duty cycles as the next duty cycles of the PWM pulse signal (step SB4 in FIG. 4), and then, the second processing ends.

Next, the first and second processing execution timing will be described in detail with reference to FIG. 2. In the example shown in FIG. 2, the second processing starts at valley positions of the high-frequency carrier signal, and PWM duty cycles calculated in the second processing are set at peak positions of the high-frequency carrier signal.

First, the first processing starts at time t1 in FIG. 2, and an electrical angle θ, a q-axis voltage command v_{q}*, and a d-axis voltage command v_{d}* are obtained as calculation results at time t2. Next, the second processing reflecting these calculation results starts at a next valley position in the high-frequency carrier signal, at time t3, and a PWM duty cycle obtained in this processing is set at a peak position of the high-frequency carrier signal, at time t4. Then, a second round of the second processing starts at a next valley position in the high-frequency carrier signal, at time t5. The electrical angle θ, the q-axis voltage command v_{q}*, and the d-axis voltage command v_{d}* calculated in the immediately preceding first processing, at time t2, are also used in this second processing. The PWM duty cycle calculated in this second processing is set at a peak position of the high-frequency carrier signal, at time t7. The first processing is executed again at time t6, at which the second round of the second processing is completed, and a new electrical angle θ, q-axis voltage command v_{q}*, and d-axis voltage command v_{d}* are obtained at time t8. Then, the second processing reflecting the electrical angle θ, the q-axis voltage command v_{q}*, and the d-axis voltage command v_{d}* are executed at time t9 and time t10.

Because a PWM duty cycle is regenerated at every peak portion of the high-frequency carrier signal in this manner, a fine PWM pulse signal as shown in FIG. 2 is generated and is output to the inverter 3 (see FIG. 1).

As shown, because FIG. 2 shows an example in which the frequency of the high-frequency carrier signal is double the frequency of the reference carrier signal (m = 2), whereas the first processing is executed once, the second processing is executed twice during a single cycle of the reference carrier frequency. In other words, the second processing, using the calculation results of the first processing, is executed twice.

As has been described above, because the inverter control device 4 according to this example generates a high-frequency carrier signal having a frequency that is m (m is an integer larger than or equal to 2) times the frequency of the reference carrier signal and regenerates a PWM duty cycle at an interval of one cycle of the high-frequency carrier signal, the inverter 4 can be finely controlled. Furthermore, because the processing to obtain the PWM duty cycle is divided into the first processing and the second processing, and calculation results (the electrical angle θ, the q-axis voltage command v_{q}*, and the d-axis voltage command v_{d}*) obtained in the first processing are advantageously utilized to obtain a PWM duty cycle in the second processing, the processing time for calculating the PWM duty cycle can be reduced. Accordingly, even if the length of a single cycle of the high-frequency carrier signal is reduced by multiplying the frequency of the reference carrier signal by m, a PWM duty cycle can be calculated within the duration of a single cycle.

FIG. 6 is a diagram showing a comparison between the processing timing with an inverter control device of the related art and the processing timing with the inverter control device 4 according to this example. The upper diagram in FIG. 6 shows the processing timing in the related art, and the lower diagram in FIG. 6 shows the processing timing in this example.

It can be seen that the time required for one round of processing is long in the example of the related art because the first processing and the second processing in this example are executed as a continuous processing sequence. Therefore, if the carrier frequency is increased, the processing is not completed by the time a peak portion appears in the carrier signal, at which a PWM duty cycle is set, and a PWM duty cycle cannot be calculated. This results in a delay in regenerating a PWM duty cycle.

In contrast, in this example, by dividing the processing, which has been performed as a continuous processing sequence in the related art, into the first processing and the second processing, and by using the calculation results obtained in the first processing at least twice in the second processing, the time for calculation is reduced. Because the inverter control device 4 according to this example has an excellent advantage in that the time for calculation is reduced, even if the carrier frequency is increased, as shown in FIG. 6, a PWM duty cycle can be regenerated in accordance with the carrier frequency. Thus, even if high-speed, multipolar motors are required, inverter control that can satisfy this requirement can be achieved.

Although a case where the frequency of the high-frequency carrier signal is double the frequency of the reference carrier signal (m = 2) has been described in this example, the multiplier of the frequency can be increased within the range of the time required for the second processing.

FIG. 7 shows a case where the frequency of the high-frequency carrier signal is four times the frequency of the reference carrier signal (m = 4). When the frequency is quadrupled, a problem occurs in that the first processing is not completed within a cycle of the second processing. In such a case, the second processing is prioritized over the first processing. By doing so, if the second processing execution timing occurs during execution of the first processing, the first processing is temporarily stopped, and the second processing is executed as interruption processing. Then, after the second processing is completed, the first processing is restarted from the position where it was stopped. Thus, the second processing can be executed at an interval of one cycle of the high-frequency carrier signal, and the first processing can be executed at an interval of one cycle of the reference carrier signal.

Although a case where the sensorless vector control is employed to obtain three-phase voltage command values has been described in this example, the control method for calculating two-phase voltage command values is not limited to this. For example, a known control method, such as normal (not sensorless) vector control or V/f control, may be employed.

### Embodiment

Next, an embodiment of the present invention will be described with reference to the drawings.

The inverter device according to the embodiment of the present invention has the same configuration as the above-described inverter control device according to the example, except that the carrier signal has a frequency that is k (k is larger than or equal to 1 and is a multiple of 0.5) times the reference carrier frequency and that the second processing is executed at an interval of half a cycle of the carrier signal. The inverter control device according to this embodiment will be described below focusing on configurations different from those of the first embodiment, and descriptions of the configurations in common with those of the example will be omitted.

FIG. 8 is a diagram showing the execution timing of the processing according to this embodiment. As shown in FIG. 8, in this embodiment, using the reference carrier signal as the carrier signal (when k = 1), the second processing is executed at valley positions and peak positions of the carrier signal, regenerating PWM duty cycles at the peak positions and valley positions of the carrier signal. In other words, in this embodiment, the first processing is executed at an interval of one cycle of the carrier signal, and the second processing is executed at an interval of half a cycle thereof.

A detailed description will be given below.

The first processing starts at time t1 in FIG. 8, and an electrical angle θ, a q-axis voltage command v_{q}*, and a d-axis voltage command v_{d}* are obtained as calculation results at time t2. Then, the second processing reflecting the calculation results starts at a peak position of the carrier signal, at time t3, and a PWM duty cycle obtained in this processing is set at a next valley position in the carrier signal, at time t4. At time t4, a second round of the second processing is executed. In this second round of the second processing, the calculation results obtained in the immediately preceding first processing, at time t2, are used. A PWM duty cycle obtained in the second round of the second processing is set at a next peak position in the carrier signal, at time t7.

When the second round of the second processing is completed at time t5, the first processing is executed again at this time, and a new electrical angle θ, q-axis voltage command v_{q}*, and d-axis voltage command v_{d}* are obtained at time t6. Then, the second processing using the electrical angle θ, the q-axis voltage command v_{q}*, and the d-axis voltage command v_{d}* starts at a peak position of the reference carrier signal, at time t7.

Because the second processing is executed at peak positions and valley positions of the carrier signal in this manner, a PWM duty cycle can be regenerated once in half a cycle of the carrier signal. As shown in FIG. 8, in this embodiment, although the pulse width of the PWM pulse signal may be asymmetric with respect to the valley positions of the carrier signal because a PWM duty cycle is regenerated once in half a cycle of the carrier signal, this causes no problem in the control.

As has been described above, with the inverter control device according to this embodiment, because the first processing is executed at an interval of one cycle at the carrier frequency and the second processing is executed at an interval of half a cycle at the carrier frequency to regenerate a PWM duty cycle at an interval of half a cycle, the inverter can be controlled more finely than in the related art even when a reference carrier signal is used.

As another example of this embodiment, FIG. 9 shows processing timing when k = 1.5, i.e., when the frequency of the carrier signal is 1.5 times the reference carrier frequency. In this case, whereas the first processing is executed once, the second processing is executed three times during a single cycle of the reference carrier frequency. In other words, the calculation results of the first processing are used in three rounds of the second processing.

By making the carrier frequency higher than the reference carrier frequency in this manner, the rate of regenerating a PWM duty cycle can be further increased, thereby enabling appropriate inverter control even in the case of severe requirements with regard to moves towards higher speed motors and making motors multipolar.

## Claims

1. An inverter control device (4) configured to generate a PWM pulse signal using a carrier signal having a carrier frequency that is k wherein k is larger than or equal to 1 and is a multiple of 0.5 times a reference carrier frequency and to regenerate a PWM duty cycle at an interval of half a cycle of the carrier signal, the inverter control device comprising control means (13) configured to execute first processing at an interval of one cycle at the reference carrier frequency and configured to execute second processing at an interval of half a cycle of the carrier signal, wherein
the first processing includes the steps of:
calculating (SA2) a two-phase current (i_{q}, i_{d}) by converting a measured motor current from three-phase to two-phase; and
calculating (SA3) a two-phase voltage command value (v_{q}*, v_{d}*) and a first electrical angle (θ) from the two-phase current (i_{q}, i_{d}),
the second processing includes the steps of:
calculating (SB1) a second electrical angle (θ') by adding a shift angle (Δθ) obtained based on the time elapsed from the first processing to the first electrical angle (θ) calculated in the first processing;
calculating (SB2) a three-phase voltage command value (vᵤ*, vᵥ*, v_{w}*) by converting the two-phase voltage command value (v_{q}*, v_{d}*) obtained in the first processing from two-phase to three-phase using the calculated second electrical angle (8'); and
calculating (SB3) a duty cycle (duty_u, duty_v, duty_w) of the PWM pulse signal from the three-phase voltage command value (vᵤ*, vᵥ*, v_{w}*), and
wherein the control means is configured to prioritize the second processing over the first processing, whereby if the second processing execution timing occurs during execution of the first processing, the second processing is executed by interrupting the first processing.

2. An inverter control method for generating a PWM pulse signal using a carrier signal having a carrier frequency that is wherein k is larger than or equal to 1 and is a multiple of 0.5 times a reference carrier frequency and regenerating a PWM duty cycle at an interval of half a cycle of the carrier signal, the method comprising:
a first processing step of executing first processing at an interval of one cycle at the reference carrier frequency; and
a second processing step of executing second processing at an interval of half a cycle of the carrier signal, wherein
in the first processing step, a two-phase current (i_{q}, i_{d}) is calculated (SA2) by converting a measured motor current from three-phase to two-phase, and a two-phase voltage command value (v_{q}*, v_{d}*) and a first electrical angle (θ) are calculated (SA3) from the two-phase current (i_{q}, i_{d}),
in the second processing step (SB1), a second electrical angle (θ') is calculated (SB1) by adding a shift angle (Δθ) obtained based on the time elapsed from the first processing to the first electrical angle (θ) calculated in the first processing step, a three-phase voltage command value (vᵤ*, vᵥ*, v_{w}*) is calculated (SB2) by converting the two-phase voltage command value (v_{q}*, v_{d}*) obtained in the first processing from two-phase to three-phase using the calculated second electrical angle (θ'), and a duty cycle (duty_u, duty_v, duty_w) of the PWM pulse signal is calculated from the three-phase voltage command value (vᵤ*, vᵥ*, v_{w}*), and wherein the second processing is prioritized over the first processing, whereby if the second processing execution timing occurs during execution of the first processing, the second processing is executed by interrupting the first processing.

## Patentansprüche

1. Wechselrichter-Steuervorrichtung (4), die so konfiguriert ist, dass sie ein PWM-Impulssignal unter Verwendung eines Trägersignals erzeugt, das eine Trägerfrequenz hat, die k ist, wobei k größer als oder gleich 1 und ein Mehrfaches des 0,5-Fachen einer Referenzträgerfrequenz ist, und ein PWM-Tastverhältnis in einem Intervall von einem halben Zyklus des Trägersignals erneuert, wobei die Wechselrichter-Steuervorrichtung Steuermittel (13) umfasst, die so konfiguriert sind, dass sie die erste Verarbeitung in einem Intervall von einem Zyklus bei der Referenzträgerfrequenz ausführen und so konfiguriert sind, dass sie eine zweite Verarbeitung in einem Intervall von einem halben Zyklus des Trägersignals ausführen, wobei die erste Verarbeitung die folgenden Schritte umfasst:
Berechnen (SA2) eines Zweiphasenstroms (i_{q}, i_{d}) durch Umwandeln eines gemessenen Motorstroms von dreiphasig in zweiphasig; und
Berechnung (SA3) eines zweiphasigen Spannungssollwerts (v_{q}*, v_{d}*) und eines ersten elektrischen Winkels (θ) aus dem Zweiphasenstrom (i_{q}, i_{d}), wobei die zweite Verarbeitung die folgenden Schritte umfasst:
Berechnen (SB1) eines zweiten elektrischen Winkels (θ') durch Addieren eines Verschiebungswinkels (Δθ), der auf der Grundlage der bei der ersten Verarbeitung vergangenen Zeit erzielt wurde, zu dem ersten elektrischen Winkel (θ), der bei der ersten Verarbeitung berechnet wurde;
Berechnen (SB2) eines Dreiphasen-Spannungssollwerts (vᵤ*, vᵥ*, v_{w}*) durch Umwandeln des bei der ersten Verarbeitung erzielten Zweiphasen-Spannungssollwerts (v_{q}*, v_{d}*) von zweiphasig in dreiphasig unter Verwendung des berechneten zweiten elektrischen Winkels (θ'); und
Berechnung (SB3) eines Tastverhältnisses (duty_u, duty_v, duty_w) des PWM-Impulssignals aus dem Dreiphasen-Spannungssollwert (vᵤ*, vᵥ*, v_{w}*), und wobei die Steuermittel so konfiguriert sind, dass sie die zweite Verarbeitung gegenüber der ersten Verarbeitung priorisiert, wobei, wenn die Ausführungszeit der zweiten Verarbeitung während der Ausführung der ersten Verarbeitung eintritt, die zweite Verarbeitung durch Unterbrechen der ersten Verarbeitung ausgeführt wird.

2. Wechselrichter-Steuerverfahren zur Erzeugung eines PWM-Impulssignals unter Verwendung eines Trägersignals mit einer Trägerfrequenz, die k ist, wobei k größer als oder gleich 1 und ein Mehrfaches des 0,5-Fachen einer Referenzträgerfrequenz ist, und ein PWM-Tastverhältnis in einem Intervall von einem halben Zyklus des Trägersignals erneuert, wobei das Verfahren Folgendes umfasst:
einen ersten Verarbeitungsschritt mit Ausführung der ersten Verarbeitung in einem Intervall von einem Zyklus bei der Referenzträgerfrequenz; und
einen zweiten Verarbeitungsschritt mit Ausführen einer zweiten Verarbeitung in einem Intervall von einem halben Zyklus des Trägersignals, wobei im ersten Verarbeitungsschritt ein Zweiphasenstrom (i_{q}, i_{d}) berechnet wird (SA2), indem ein gemessener Motorstrom von dreiphasig in zweiphasig umgewandelt wird und ein Zweiphasen-Spannungssollwert (v_{q}*, v_{d}*) und ein erster elektrischer Winkel (θ) aus dem zweiphasigen Strom (i_{q}, i_{d}) berechnet werden (SA3), im zweiten Verarbeitungsschritt (SB1) ein zweiter elektrischer Winkel (θ') berechnet (SB1) wird, indem ein Verschiebungswinkel (Δθ), der auf der Grundlage der bei der ersten Verarbeitung vergangenen Zeit erzielt wurde, zum im ersten Verarbeitungsschritt berechneten ersten elektrischen Winkel (θ)addiert wird, ein Dreiphasen-SpannungsSollwert (vᵤ*, vᵥ*, v_{w}*) berechnet wird (SB2), indem der Zweiphasen-Spannungssollwert (v_{q}*, v_{d}*), der bei der ersten Verarbeitung von zweiphasig zu dreiphasig erzielt wurde, unter Verwendung des berechneten zweiten elektrischen Winkels (θ') umgewandelt wird, und ein Tastverhältnis (duty_u, duty_v, duty_w) des PWM-Impulssignals aus dem Dreiphasen-Spannungssollwert (vᵤ*, vᵥ*, v_{w}*), berechnet wird, und wobei die zweite Verarbeitung gegenüber der ersten Verarbeitung priorisiert ist, wobei, wenn die Ausführungszeit der zweiten Verarbeitung während der Ausführung der ersten Verarbeitung eintritt, die zweite Verarbeitung durch Unterbrechung der ersten Verarbeitung ausgeführt wird.

## Revendications

1. Dispositif de commande d'onduleur (4) configuré pour générer un signal d'impulsion PWM (modulation d'impulsions en durée) en utilisant un signal porteur ayant une fréquence porteuse qui est k, dans lequel k est supérieur ou égal à 1 et est un multiple de 0,5 fois une fréquence porteuse de référence et pour régénérer un rapport cyclique PWM à un intervalle d'un demi-cycle du signal porteur, le dispositif de commande d'onduleur comprenant un moyen de commande (13) configuré pour exécuter un premier traitement à un intervalle d'un cycle à la fréquence porteuse de référence et configuré pour exécuter un second traitement à un intervalle d'un demi-cycle du signal porteur, dans lequel
le premier traitement comporte les étapes consistant à :
calculer (SA2) un courant biphasé (i_{q}, i_{d}) en convertissant un courant de moteur mesuré de triphasé à biphasé ; et
calculer (SA3) une valeur d'instruction de tension biphasée (v_{q}*, v_{d}*) et un premier angle électrique (θ) à partir du courant biphasé (i_{q}, i_{d}),
le second traitement comporte les étapes consistant à :
calculer (SB1) un second angle électrique (θ') en ajoutant un angle de décalage (Δθ), obtenu sur la base du temps écoulé depuis le premier traitement, au premier angle électrique (θ) calculé dans le premier traitement ;
calculer (SB2) une valeur d'instruction de tension triphasée (vᵤ*, vᵥ*, v_{w}*) en convertissant la valeur d'instruction de tension biphasée (v_{q}*, v_{d}*), obtenue au cours du premier traitement, de biphasée à triphasée en utilisant le second angle électrique (θ') calculé ; et
calculer (SB3) un rapport cyclique (duty_u, duty_v, duty_w) du signal d'impulsion PWM à partir de la valeur d'instruction de tension triphasée (vᵤ*, vᵥ*, v_{w}*), et
dans lequel le moyen de commande est configuré pour donner la priorité au second traitement par rapport au premier traitement, de sorte que si le moment d'exécution du second traitement se produit pendant l'exécution du premier traitement, le second traitement est exécuté en interrompant le premier traitement.

2. Procédé de commande d'onduleur pour générer un signal d'impulsion PWM en utilisant un signal porteur ayant une fréquence porteuse qui est k, dans lequel k est supérieur ou égal à 1 et est un multiple de 0,5 fois une fréquence porteuse de référence, et pour régénérer un rapport cyclique PWM à un intervalle d'un demi-cycle du signal porteur, le procédé comprenant :
une étape de premier traitement consistant à exécuter le premier traitement à un intervalle d'un cycle à la fréquence porteuse de référence ; et
une étape de second traitement consistant à exécuter le second traitement à un intervalle d'un demi-cycle du signal porteur, dans lequel
à l'étape de premier traitement, un courant biphasé (i_{q}, i_{d}) est calculé (SA2) en convertissant un courant de moteur mesuré de triphasé à biphasé, et une valeur d'instruction de tension biphasée (v_{q}*, v_{d}*) et un premier angle électrique (θ) sont calculés (SA3) à partir du courant biphasé (i_{q}, i_{d}),
à l'étape de second traitement (SB1), un second angle électrique (θ') est calculé (SB1) en ajoutant un angle de décalage (Δθ), obtenu sur la base du temps écoulé depuis le premier traitement, au premier angle électrique (θ) calculé à l'étape de premier traitement, une valeur d'instruction de tension triphasée (vᵤ*, vᵥ*, v_{w}*) est calculée (SB2) en convertissant la valeur d'instruction de tension biphasée (v_{q}*, v_{d}*), obtenue au cours du premier traitement, de biphasée à triphasée en utilisant le second angle électrique (θ) calculé, et un rapport cyclique (duty_u, duty_v, duty_w) du signal d'impulsion PWM est calculé à partir de la valeur d'instruction de tension triphasée (vᵤ*, vᵥ*, v_{w}*), et dans lequel le second traitement est prioritaire par rapport au premier traitement, de sorte que si le moment d'exécution du second traitement se produit pendant l'exécution du premier traitement, le second traitement est exécuté en interrompant le premier traitement.
